(19) Europäisches Patentamt / European Patent Office / Office européen des brevets

(11) EP 4 553 330 A1

(12) **EUROPEAN PATENT APPLICATION**
published in accordance with Art. 153(4) EPC

(43) Date of publication:
14.05.2025 Bulletin 2025/20

(21) Application number: 23835470.8

(22) Date of filing: 03.07.2023

(51) International Patent Classification (IPC):
*F16C 33/32* (2006.01)      *B24B 11/02* (2006.01)
*C04B 35/10* (2006.01)      *C04B 35/48* (2006.01)
*C04B 35/584* (2006.01)

(52) Cooperative Patent Classification (CPC):
B24B 11/02; C04B 35/10; C04B 35/48;
C04B 35/584; F16C 33/32

(86) International application number:
PCT/JP2023/024590

(87) International publication number:
WO 2024/009938 (11.01.2024 Gazette 2024/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.07.2022 JP 2022108734

(71) Applicants:
• Kabushiki Kaisha Toshiba
  Tokyo 105-0023 (JP)
• Toshiba Materials Co., Ltd.
  Isogo-Ku
  Yokohama-Shi
  Kanagawa 235-0032 (JP)

(72) Inventors:
• SANO, Shoya
  Yokohama-shi, Kanagawa 235-0032 (JP)
• YAMADA, Katsuhiko
  Yokohama-shi, Kanagawa 235-0032 (JP)
• SAKAI, Ryo
  Yokohama-shi, Kanagawa 235-0032 (JP)
• YAMAGUTI, Haruhiko
  Yokohama-shi, Kanagawa 235-0032 (JP)
• FUNAKI, Kai
  Yokohama-shi, Kanagawa 235-0032 (JP)
• AKIYA, Suguru
  Yokohama-shi, Kanagawa 235-0032 (JP)
• KIJIMA, Kouichi
  Yokohama-shi, Kanagawa 235-0032 (JP)

(74) Representative: Henkel & Partner mbB
Patentanwaltskanzlei, Rechtsanwaltskanzlei
Maximiliansplatz 21
80333 München (DE)

(54) **MATERIAL FOR CERAMIC BALL, DEVICE FOR PROCESSING CERAMIC FORMED BODY, AND METHOD FOR PROCESSING CERAMIC FORMED BODY**

(57)    A material for a ceramic ball according to the present embodiment is characterized in that a deviation from spherical form is 2% or less, and an arithmetic mean roughness Ra is 0.2 $\mu$m to 2 $\mu$m inclusive. Moreover, in the material for a ceramic ball, a maximum cross-sectional height Rt is preferably 4 $\mu$m to 20 $\mu$m inclusive. Furthermore, in the material for a ceramic ball, Ra1/Ra2 is preferably 0.2 to 2, where Ra1 is the surface roughness Ra in a circumferential direction of a belt-like mark, and Ra2 is the surface roughness Ra of a circumference in a direction perpendicular to the belt-like mark.

FIG. 2

EP 4 553 330 A1

**Description**

## TECHNICAL FIELD

Embodiments that will be described later relate to a material for a ceramic ball, a device for processing a ceramic formed body, and a method for processing a ceramic formed body.

## BACKGROUND ART

Ceramic balls are used for various bearings. Ceramic balls used for bearings are called bearing balls. Examples of such bearing balls include ceramic sintered bodies such as silicon nitride sintered bodies, aluminum oxide sintered bodies, zirconium oxide sintered bodies, and aluzir sintered bodies. Aluzir is a mixture of aluminum oxide and zirconium oxide.

ASTM (American Society for Testing and Materials)_F2094 specifies grades of surface roughness and material properties of bearing balls. Bearing balls are required to achieve the grades appropriate for fields where bearings are to be used. As bearing balls, spherical ceramic balls are required. For example, ASTM_F2094 specifies that bearing balls should have a surface roughness Ra of 0.013 μm or less.

A spherical ceramic ball is obtained by subjecting a material for a ceramic ball to polishing processing. The material for a ceramic ball refers to a ceramic sintered body to be subjected to polishing processing to obtain a ceramic ball. The material for a ceramic ball is also called a rough ball.

For example, Japanese Patent No. 4761613 (Patent Document 1) and Japanese Patent No. 3853197 (Patent Document 2) disclose materials for ceramic balls having a belt-like portion. A material for a ceramic ball is produced as a formed body by die pressing and therefore always has a belt-like portion. Patent Document 1 and Patent Document 2 state that a shape of the belt-like portion is improved to enhance polishing efficiency of the material for a ceramic ball. The materials for ceramic balls disclosed in Patent Document 1 and Patent Document 2 make it possible to enhance polishing efficiency, but the presence of the belt-like portion prevents further enhancement.

On the other hand, Japanese Patent Laid-Open No. 2000-185976 (Patent Document 3) discloses that a material for a ceramic ball is produced by tumbling granulation.

## PRIOR ART DOCUMENTS

### PATENT DOCUMENT

Patent Document 1: Japanese Patent No. 4761613
Patent Document 2: Japanese Patent No. 3853197
Patent Document 3: Japanese Patent Laid-Open No. 2000-185976

## SUMMARY OF THE INVENTION

### PROBLEMS TO BE SOLVED BY THE INVENTION

As disclosed in Patent Document 3, a material for a ceramic ball produced by sintering a ceramic formed body obtained by tumbling granulation has no belt-like portion. Absence of a belt-like portion in the material for a ceramic ball enhances the polishing efficiency of the material for a ceramic ball. However, tumbling granulation is performed at a low pressing pressure, thereby resulting in a poorly-densified formed body. When such a poorly-densified formed body is sintered, a material for a ceramic ball as a sintered body also has a low density.

Patent Document 3 states that tumbling granulation is effective for bearing balls having a diameter as small as 4.5 mm or less. Bearing balls having a diameter of 4.5 mm or less are used for hard disk drives (HDDs) and the like. In a motor of a HDD, a low load is applied to bearing balls. However, in some fields where heavy loads are applied, bearing balls produced by tumbling granulation are poor in durability.

Therefore, embodiments are intended to provide a material for a ceramic ball that is capable of improving polishing efficiency and has excellent durability.

### MEANS FOR SOLVING THE PROBLEMS

In a material for a ceramic ball according to the embodiment, a sphericity is 2% or less, and an arithmetic mean roughness Ra is 0.2 $\mu$m or more and 2 $\mu$m or less. The sphericity of the material for the ceramic ball is obtained as: one value of circularity ((maximum diameter - minimum diameter) / average diameter) determined from one projection image when projected onto a plane from one direction; or an average of values of circularity determined from projection images when projected onto planes from respective directions. For example, the circularity of the projection image is determined based on eight diameters, which pass through the gravity center of a projection image as the center and are equally separated from each other. That is, in a material for a ceramic ball according to the embodiment, a circularity as determined from eight diameters, which pass through the gravity center of a projection image projected onto a plane in any direction as the center and are equally separated from each other, is 2% or less, and an arithmetic mean roughness Ra is 0.2 $\mu$m or more and 2 $\mu$m or less.

## BRIEF DESCRIPTION OF THE DRAWINGS

FIG. 1 is an external view of an example of a material for a ceramic ball having a belt-like portion.
FIG. 2 is an external view of an example of a material for a ceramic ball according to an embodiment from which a belt-like portion has completely been removed.
FIG. 3 is a diagram showing an example of an almost circular projection image projected onto a plane and eight diameters passing through the gravity center of the projection image as the center and equally separated from each other.
FIG. 4 is a diagram showing an example of a device for processing a ceramic formed body for producing the material for a ceramic ball according to the embodiment.
FIG. 5 is a conceptual diagram illustrating an example of an amount of displacement of an outer circumferential surface of a ceramic formed body for producing the material for a ceramic ball according to the embodiment.
FIG. 6 is an external view of an example of a spherical ceramic formed body for producing the material for a ceramic ball according to the embodiment.

## DESCRIPTION OF EMBODIMENTS

In a material for a ceramic ball according to an embodiment, a sphericity is 2% or less, and an arithmetic mean roughness Ra is 0.2 $\mu$m or more and 2 $\mu$m or less. The material for a ceramic ball according to the embodiment refers to a ceramic sintered body to be subjected to polishing processing to obtain a ceramic ball. The material for a ceramic ball is also called a rough ball.

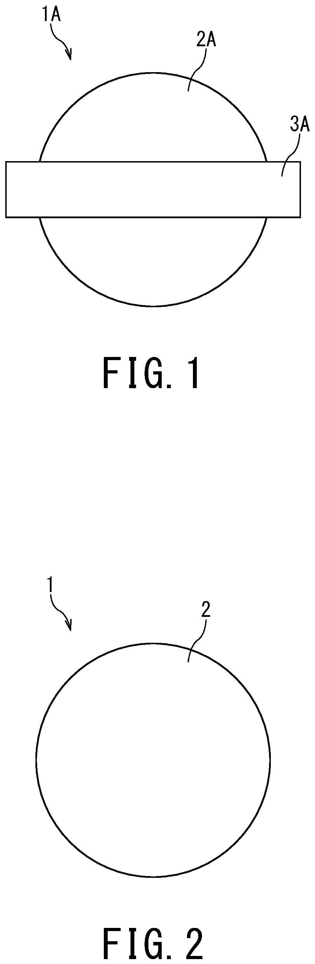

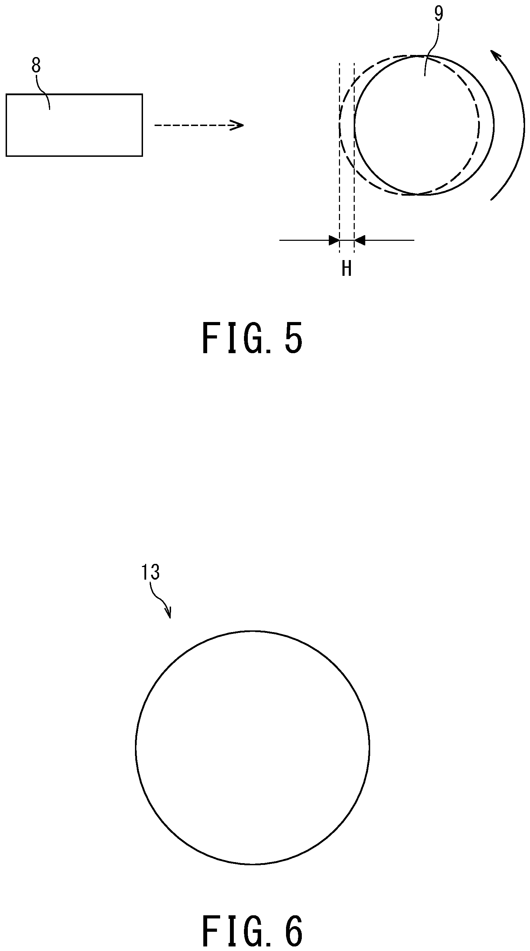

Shown in FIG. 1 is an example of a conventional material for a ceramic ball having a belt-like portion. In FIG. 1, reference sign 1A denotes a material for a ceramic ball obtained by sintering a ceramic formed body having a belt-like portion, reference sign 2A denotes a spherical surface portion of the material for a ceramic ball 1A, and reference sign 3A denotes a belt-like portion of the material for a ceramic ball 1A. Shown in FIG. 2 is an example of the material for a ceramic ball according to the embodiment. In FIG. 2, reference sign 1 denotes a material for a ceramic ball according to the embodiment obtained by sintering a ceramic formed body 13 (shown in FIG. 6) from which a belt-like portion has completely been removed.

As shown in FIG. 1, the conventional material for a ceramic ball 1A includes the spherical surface portion 2A and the belt-like portion 3A formed around a circumference of the spherical surface portion 2A. On the other hand, as shown in FIG. 2, the material for a ceramic ball 1 according to the embodiment has a spherical surface portion 2 but does not have the belt-like portion 3A shown in FIG. 1.

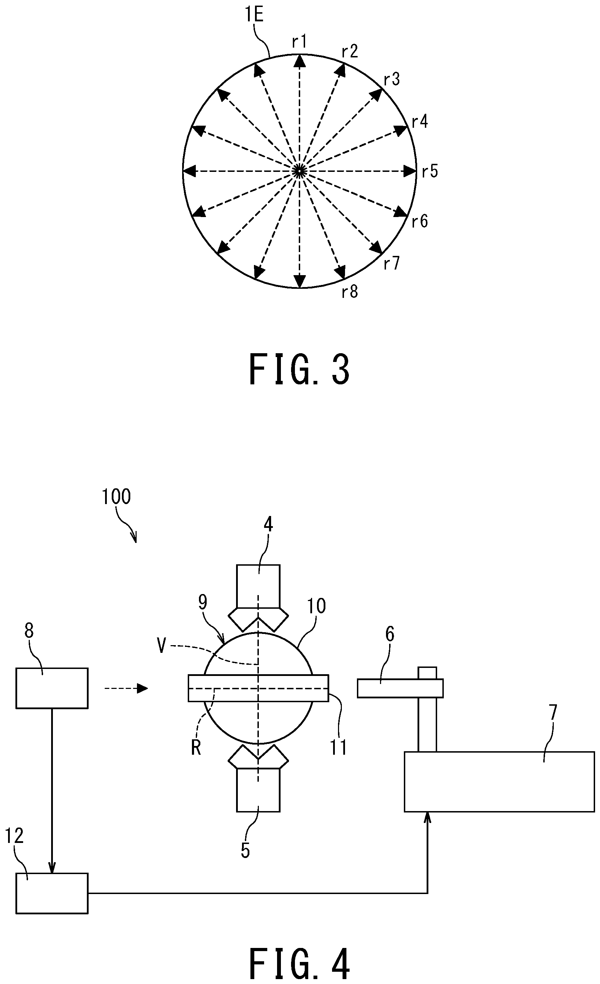

The material for a ceramic ball 1 has a sphericity of 2% or less. For example, a circularity of a projection image of the material for a ceramic ball 1 as determined from eight diameters, which pass through the gravity center of one projection image projected onto a plane in one direction as the center and are equally separated from each other, is 2% or less. Shown in FIG. 3 is an example of an almost circular projection image 1E projected onto a plane and eight diameters r1 to r8 passing through the gravity center of the projection image as the center and equally separated from each other. In FIG. 3, reference sign 1E denotes a projection image of the material for a ceramic ball 1 and reference signs r1 to r8 denote eight diameters.

Shape measurement using the projection image 1E is performed with an optical three-dimensional profilometer. The shape measurement is performed using VR-5000 manufactured by KEYENCE CORPORATION as a three-dimensional profilometer and analysis software for VR-5000. A measurement device to be used is not limited as long as it has a same function as VR-5000.

First, equally-separated eight diameters r1 to r8 of a projection image 1E of the material for a ceramic ball 1 projected onto a plane in any direction are measured. In FIG. 3, diameters are measured at positions defined by equally dividing a circumference of the projection image 1E by 16. The diameters r1 to r8 are defined as measured diameters. A maximum diameter and a minimum diameter among the measured diameters r1 to r8 are respectively defined as rmax and rmin, and an average of the measured diameters r1 to r8 is defined as an average diameter. The circularity of projection image 1E of the material for a ceramic ball 1 is determined by the following formula.

$$\texttt{Circularity (\%) = (|rmax - rmin| / average diameter) × 100}$$

As described above, a circle having a smaller circularity is closer to a true circle. A phrase "high circularity" or "good circularity" means that a value of circularity is small. To the contrary, a phrase "low circularity" or "bad circularity" means that the value of circularity is large. It should be noted that the sphericity of the material for a ceramic ball 1 is determined as one value of circularity based on one projection image 1E projected onto a plane in one direction or as an average of values of circularity based on projection images 1E projected onto planes in respective directions.

The material for a ceramic ball 1 is characterized in that its sphericity (i.e., one value of circularity determined from one projection image 1E or an average of values of circularity determined from projection images 1E) is 2% or less. The material for a ceramic ball 1 with a sphericity of 2% or less has a shape close to a true sphere (whose projection image is a true circle). The projection image 1E of the material for a ceramic ball 1 has a shape close to a true circle and therefore does not virtually have an elliptical shape. Further, the material for a ceramic ball 1 has virtually no belt-like portion (the belt-like portion 3A shown in FIG. 1). By setting the sphericity of the material for a ceramic ball 1 to 2% or less, a polishing allowance can be reduced. Therefore, the sphericity of the material for a ceramic ball 1 is preferably 2% or less, more preferably 0% or more and 1.5% or less.

The material for a ceramic ball 1 has an arithmetic mean roughness Ra of 0.2 μm or more and 2 μm or less. The arithmetic mean roughness Ra is measured in accordance with JIS-B-0601 (2013). In measurement of surface roughness, a measurement length is set to 0.8 mm or more. JIS-B-0601 corresponds to ISO 4287. The measurement of surface roughness is performed using SURFCOM2000 manufactured by TOKYO SEIMITSU CO., LTD. as a surface roughness measurement device and evaluative analysis software for SURFCOM2000. A measurement device to be used is not limited as long as it has the same function as SURFCOM2000.

The material for a ceramic ball 1 has an arithmetic mean roughness Ra of 0.2 μm or more and 2 μm or less wherever the surface is measured. In order to achieve an arithmetic mean roughness Ra of less than 0.2 μm, the material for a ceramic ball 1 needs to be subjected to a polishing step. On the other hand, an arithmetic mean roughness Ra exceeding 2 μm may be a possible cause of breakage during polishing processing due to large surface irregularities. Therefore, the arithmetic mean roughness Ra of the material for a ceramic ball 1 is preferably 0.2 μm or more and 2 μm or less, more preferably 0.5 μm or more and 1.0 μm or less. It should be noted that as described above, ASTM_F2094 specifies the arithmetic mean roughness Ra according to the grades of bearing balls. The maximum Ra is 0.013 μm. The arithmetic mean roughness Ra of the material for a ceramic ball 1 is 0.2 to 2 μm. Therefore, the material for a ceramic ball 1 is distinguishable from a ceramic ball subjected to polishing processing so as to be usable as a bearing ball.

The material for a ceramic ball 1 preferably has, as its surface, a sintered surface, a surface obtained by subjecting a sintered surface to honing treatment, or a surface obtained by subjecting a sintered surface to washing treatment. The sintered surface refers to a surface of a ceramic sintered body after a sintering step. The honing treatment or the washing treatment is effective at removing dirt from the sintered surface. Therefore, the honing treatment and the washing treatment are distinguished from the polishing processing.

As will be described later, for the control of sphericity of the material for a ceramic ball 1, it is effective to remove a belt-like portion 11 (shown in FIG. 4) of a ceramic formed body 9 before sintering. By controlling removal of the belt-like portion 11 of the ceramic formed body 9, it is possible to control the arithmetic mean roughness Ra of a sintered surface (including a sintered surface subjected to honing treatment or washing treatment). For example, tumbling granulation disclosed in Patent Document 3 results in a large arithmetic mean roughness Ra because a pressing pressure is not applied.

The surface of the material for a ceramic ball 1 preferably has a total height of profile Rt of 4 μm or more and 20 μm or less. The total height of profile Rt is also measured in the same manner as the above-described arithmetic mean roughness Ra. In order to allow the material for a ceramic ball 1 to have a total height of profile Rt of less than 4 μm, the material for a ceramic ball 1 needs to be subjected to polishing processing. On the other hand, if the total height of profile Rt exceeds 20 μm, the load of polishing processing performed on the material for a ceramic ball 1 for producing a ceramic ball (e.g., a bearing ball) may increase. Therefore, the total height of profile Rt is preferably 4 μm or more and 20 μm or less, more preferably 5 μm or more and 17 μm or less.

When the arithmetic mean roughness Ra in a circumferential direction of a belt-like portion mark is defined as Ra1 and the arithmetic mean roughness Ra of a circumference in a direction perpendicular to the belt-like portion mark is defined as Ra2, Ra1/Ra2 is preferably 0.2 or more and 2 or less. The belt-like portion mark is preferably formed by sintering the ceramic formed body 9 after the belt-like portion 11 (shown in FIG. 4) is removed from the ceramic formed body 9. The belt-like portion mark can be identified as a streaky mark formed by removing the belt-like portion. Usually, the belt-like portion mark can visually be observed. When it is difficult to identify the belt-like portion mark, Ra1/Ra2 may be determined by measuring the arithmetic mean roughness Ra in any circumferential direction and the arithmetic mean roughness Ra of a circumference in a direction perpendicular to the circumferential direction.

As described above, the material for a ceramic ball 1 has an arithmetic mean roughness Ra of 0.2 $\mu$m or more and 2 $\mu$m or less. That is, the fact that Ra1/Ra2 is 0.2 or more and 2 or less indicates that the arithmetic mean roughness Ra is non-directional. This makes it possible to prevent variations in a polishing amount during polishing processing. As a result, a polishing allowance can be reduced.

When the total height of profile Rt in a circumferential direction of a belt-like portion mark of the material for a ceramic ball 1 is defined as Rt1 and the total height of profile Rt of a circumference in a direction perpendicular to the belt-like portion mark is defined as Rt2, Rt1/Rt2 is preferably 0.2 or more and 2 or less. When it is difficult to identify the belt-like portion mark, Rt1/Rt2 may be determined by measuring the total height of profile Rt in any circumferential direction and the total height of profile Rt of a circumference in a direction perpendicular to the circumferential direction. The fact that Rt1/Rt2 is 0.2 or more and 2 or less means that Rt is non-directional. This makes it possible to prevent variations in a polishing amount during polishing processing of the material for a ceramic ball **1**. As a result, a polishing allowance can be reduced.

The arithmetic mean roughness Ra, the total height of profile Rt, Ra1/Ra2, and Rt1/Rt2 can be used in combination of two or more of them. When all of them are satisfied, a synergetic effect can be obtained.

The material for a ceramic ball 1 is preferably one selected from a silicon nitride sintered body, an aluminum oxide sintered body, a zirconium oxide sintered body, and an aluzir sintered body. The material for a ceramic ball 1 is more preferably a silicon nitride-based sintered body.

The silicon nitride sintered body preferably has a three-point bending strength of 850 MPa or more or a fracture toughness of 6 MPa·m$^{1/2}$ or more. The three-point bending strength is measured in accordance with JIS-R-1601 (2008). The fracture toughness is determined by measurement in accordance with the IF method specified in JIS-R-1607 (2015) and calculation using Niihara's formula. JIS-R-1601 corresponds to ISO 14704. JIS-R-1609 corresponds to ISO 15732.

The aluminum oxide sintered body has a three-point bending strength of 450 to 550 MPa and a fracture toughness of about 4 MPa·m$^{1/2}$. The zirconium oxide sintered body or the aluzir sintered body may have a three-point bending strength of 800 to 1000 MPa and a fracture toughness of about 6 MPa·m$^{1/2}$.

The silicon nitride sintered body is mainly composed of silicon nitride crystal grains having an aspect ratio of 1.5 or more, still 2 or more. In the silicon nitride sintered body, elongated silicon nitride crystal grains are complicatedly intertwined, which improves abrasion resistance. The zirconium oxide sintered body is mainly composed of zirconium oxide crystal grains having an aspect ratio of less than 1.5. The aluzir sintered body is also mainly composed of aluzir crystal grains having an aspect ratio of less than 1.5. Therefore, the silicon nitride sintered body is superior in abrasion resistance.

However, since the silicon nitride sintered body is mainly composed of elongated silicon nitride crystal grains, the arithmetic mean roughness Ra and the total height of profile Rt are likely to increase. By controlling the arithmetic mean roughness Ra or the total height of profile Rt in such a manner as described above, it is possible to provide a material for a ceramic ball 1 having excellent abrasion resistance while reducing a polishing allowance.

A bearing ball can be obtained by subjecting the material for a ceramic ball 1 to polishing processing. An example of a ceramic ball subjected to polishing processing is a bearing ball. The bearing ball after polishing processing has an arithmetic mean roughness Ra of 0.1 $\mu$m or less. ASTM_F2094 specifies that the arithmetic mean roughness Ra of a bearing ball should be 0.013 $\mu$m or less. The arithmetic mean roughness Ra of a bearing ball decreases as the grade of the bearing ball increases. When a bearing ball is produced from the material for a ceramic ball 1, polishing processing needs to be performed to reduce the arithmetic mean roughness Ra.

The bearing ball preferably has a diameter of 5 mm or more. In order to improve the abrasion resistance of the bearing ball, a dense ceramic formed body 9 is preferably prepared. In order to obtain a dense ceramic formed body 9, die pressing is effectively used. The diameter of the bearing ball is not limited, but is preferably 70 mm or less. The bearing ball can have a diameter exceeding 70 mm, but the production cost thereof may increase. Therefore, the diameter of the bearing ball is preferably 5 mm or more and 70 mm or less, more preferably 8 mm or more and 55 mm or less.

Although the bearing ball has been described above as an example of a ceramic ball produced from the material for a ceramic ball 1, the ceramic ball may be used not only as a bearing ball but also as a medium for use in a mixing step. Therefore, the ceramic ball produced from the material for a ceramic ball 1 refers to both a bearing ball and a medium.

Hereinbelow, a method for producing a material for a ceramic ball 1 will be described. A method for producing a material for a ceramic ball 1 is not limited as long as a material for a ceramic ball 1 having such a configuration as described above can be produced. Described below is a method for obtaining a material for a ceramic ball 1 at high yield.

A material for a ceramic ball 1 is produced by sintering a spherical ceramic formed body obtained by completely removing a belt-like portion from a ceramic formed body with a processing device 100 that will be described later. The processing device 100 includes a formed body fixing unit and a processing unit. The formed body fixing unit rotatably fixes a ceramic formed body, which has a spherical surface portion and a belt-like portion formed around a circumference of the spherical surface portion, by clamping the spherical surface portion, and the processing unit is pressed against the belt-like portion to remove it.

Shown in FIG. 4 is an example of a device for processing a ceramic formed body. Further, shown in FIG. 5 is an example of a method for measuring the amount of displacement of an outer circumferential surface of a ceramic formed body. In FIG. 4 and FIG. 5, reference sign 4 denotes a rotation shaft end (upper rotation shaft end) that is one portion of the formed body fixing unit, reference sign 5 denotes a rotation shaft end (lower rotation shaft end) that is another portion of the formed body fixing unit, reference sign 6 denotes a processing jig that functions as the processing unit, reference sign 7 denotes a processing jig fixing unit, reference sign 8 denotes a displacement amount measurement unit, reference sign 9 denotes a ceramic formed body having a belt-like portion, reference sign 10 denotes a spherical surface portion, reference sign 11 denotes a belt-like portion, reference sign 12 denotes a control unit, reference sign 100 denotes a processing device, reference sign R denotes a central curve of outer circumference of the belt-like portion 11, reference sign V denotes a straight line (rotation axis)connecting the rotation shaft ends 4 and 5, and reference sign H denotes a displacement amount.

Hereinbelow, a method for producing a material for a ceramic ball 1 using a silicon nitride sintered body (including a method for processing a ceramic formed body 9) will be described as an example.

First, a ceramic formed body 9 having a belt-like portion 11 shown in FIG. 4 is prepared. A raw material powder slurry obtained by mixing a silicon nitride powder, a sintering aid powder, and a binder is subjected to die pressing. The die pressing is performed using dies having a spherical inner surface. By subjecting the raw material powder slurry to die pressing using upper and lower dies having a spherical inner surface, a ceramic formed body 9 can be produced which has a spherical surface portion 10 and a belt-like portion 11 formed around a circumference of the spherical surface portion 10.

The ceramic formed body 9 to be set in the processing device 100 may be either a formed body before being subjected to CIP treatment or a formed boy after being subjected to CIP treatment. The ceramic formed body 9 to be set in the processing device 100 is preferably a formed body before being subjected to CIP treatment. This is because a formed body after being subjected to CIP treatment becomes slightly hard due to CIP treatment, which may increase the load on the processing device 100 to remove the belt-like portion 11. The formed body after being subjected to a CIP treatment will be referred to as a CIP body.

It should be noted that the ceramic formed body 9 to be set in the processing device 100 is not limited to a formed body before being subjected to CIP treatment. The ceramic formed body 9 to be set in the processing device 100 may be a formed body after being subjected to at least one of a CIP treatment step, a degreasing step, and a calcining step. A formed body after being subjected to a degreasing step will be referred to as a degreased body. A formed body after being subjected to a calcining step will be referred to as a calcined body. The calcining step is a step in which heat treatment is performed at a temperature lower than that in a sintering step that will be described later. It should be noted that as in the case where the ceramic formed body 9 to be set in the processing device 100 is a CIP body, a degreased body and a calcined body also become slightly hard. Therefore, the load of the step of removing the belt-like portion 11 may slightly increase. Hereinbelow, a description will be made with reference to a case where the ceramic formed body 9 to be set in the processing device 100 is a formed body before being subjected to CIP treatment.

Then, the belt-like portion 11 of the ceramic formed body 9 before being subjected to CIP treatment is removed to obtain a spherical ceramic formed body 13 (shown in FIG. 6) (removing step). The step of removing the belt-like portion 11 is performed using the processing device 100 shown in FIG. 4.

The formed body fixing unit of the processing device 100 has rotation shaft ends 4 and 5. For the sake of convenience, the rotation shaft end 4 and the rotation shaft end 5 will be sometimes referred to as an upper rotation shaft end 4 and a lower rotation shaft end 5, respectively. At a tip of each of the upper rotation shaft end 4 and the lower rotation shaft end 5, a fixing member to fix the ceramic formed body 9 is provided. The ceramic formed body 9 is fixed between the upper rotation shaft end 4 and the lower rotation shaft end 5. At this time, the belt-like portion 11 is preferably horizontalized as shown in FIG. 4. By horizontalizing the belt-like portion 11, the step of removing the belt-like portion 11 can easily be performed.

Then, the fixed ceramic formed body 9 is rotated. After the ceramic formed body 9 is fixed between the upper rotation shaft end 4 and the lower rotation shaft end 5, the rotation shaft ends 4 and 5 themselves are rotated around the rotation axis V. The processing jig 6 is pressed against the belt-like portion 11 of the ceramic formed body 9 rotating together with the rotation shaft ends 4 and 5. The belt-like portion 11 is removed by pressing the processing jig 6 against the belt-like portion 11 of the rotating ceramic formed body 9.

Further, a plane (horizontal plane) including the central curve R of an outer circumference of the belt-like portion 11 of the fixed ceramic formed body 9 is set so as to be orthogonal to the rotation axis V. The displacement amount measurement unit 8 sequentially measures, on the plane including the central curve R, the displacement amount of outer circumferential surface of the belt-like portion 11 rotating around the rotation axis V. The displacement amount measurement unit 8 means a device that detects the physical change amount of an object by various sensor elements to measure the displacement amount of the object (a distance from a sensor to the object) by calculating a distance from the change amount. The displacement amount measurement unit 8 converts the displacement amount of outer circumferential portion of the belt-like portion 11 to digital data and sends it to the control unit 12.

The control unit 12 preferably has the function of measuring a runout value of outer circumferential surface of the belt-like portion 11 on the basis of the displacement amount of outer circumferential surface of the belt-like portion 11 measured by the displacement amount measurement unit 8 (runout value measurement function) and the function of adjusting, on the basis of the runout value, the amount of processing of the belt-like portion 11, that is, a pressing force of the processing jig 6 on the belt-like portion 11 (processing amount adjustment function). For example, the control unit 12 is constituted from a computer with a processor. In this case, the processor executes a computer program to achieve the runout value measurement function and the processing amount adjustment function. It should be noted that the runout value of outer circumferential surface of the belt-like portion 11 may be measured in consideration of a deviation of the rotation axis V from the center of the ceramic formed body 9 in addition to the displacement amount of outer circumferential surface of the belt-like portion 11.

By setting the plane including the central curve R of outer circumference of the belt-like portion 11 of the fixed ceramic formed body 9 so as to be orthogonal to the rotation axis V, the direction of rotation of the belt-like portion 11 and the circumferential direction of the belt-like portion 11 can be made the same. This makes it possible to put the processing jig 6 perpendicularly to the rotating belt-like portion 11. A rotation speed of the ceramic formed body 9 may be 30 rpm or more and 250 rpm or less. If the rotation speed is less than 30 rpm, a processing time may increase. On the other hand, if the rotation speed exceeds 250 rpm, the ceramic formed body 9 may be broken. Therefore, the rotation speed is preferably 30 rpm or more and 250 rpm or less, more preferably 50 rpm or more and 200 rpm or less.

The displacement amount measurement unit 8 is intended to measure the polishing amount of the belt-like portion 11 of the rotating ceramic formed body 9 as a displacement amount. The displacement amount measurement unit 8 is preferably a laser displacement gauge using laser light (indicated by a dashed arrow in FIG. 4). When such a laser displacement gauge is used, the displacement amount of outer circumferential surface of the belt-like portion 11 can be measured without contact with the rotating ceramic formed body 9.

Further, the displacement amount measurement unit 8 has the function of measuring, on the basis of the displacement amount of outer circumferential surface of the belt-like portion 11, a runout value of outer circumferential surface of the belt-like portion 11. Shown in FIG. 5 is a conceptual diagram of measurement of the displacement amount of outer circumferential surface of the belt-like portion 11. In FIG. 5, the ceramic formed body 9 is rotated left (counterclockwise), but the direction of rotation of the ceramic formed body 9 is not limited.

When the belt-like portion 11 of the ceramic formed body 9 is removed by the processing jig 6, the distance between a displacement amount measurement unit 8-side surface of the ceramic formed body 9 and the displacement amount measurement unit 8 is changed by the removal amount of the belt-like portion 11. This variable distance corresponds to the displacement amount H. The difference between a maximum displacement amount H and a minimum displacement amount H is referred to as a runout value. That is, the runout value can be determined from the following formula.

Runout value = maximum displacement amount H - minimum displacement amount H

The control unit 12 preferably has the function of adjusting, on the basis of the runout value, the amount of processing of the belt-like portion 11. The function of adjusting the amount of processing of the belt-like portion 11 means that the processing jig 6 is moved in a depth direction of the belt-like portion 11 (i.e., in a radial direction of the ceramic formed body 9) to change the amount of contact between the processing jig 6 and the belt-like portion 11, that is, the force to be applied. Further, by setting the control unit 12 so as to feed back the displacement amount H obtained by the displacement amount measurement unit 8 to automatically move the processing jig 6, mass productivity of the spherical ceramic formed body 13 improves. Further, the runout value is measured until the sphericity of the ceramic formed body 9 becomes 2% or less by removing the belt-like portion 11 while the ceramic formed body 9 is rotated. This makes it possible to control the sphericity of the material for a ceramic ball 1 after sintering to be 2% or less.

It is also effective to measure, in a state where the fixing position of the ceramic formed body 9 is changed by 90 degrees after removing the belt-like portion 11, the runout value of the spherical surface portion 10 in the same manner as the above-described measurement of the runout value of the belt-like portion 11. Further, it is also effective to measure the runout value of the spherical surface portion 10 in a state where the belt-like portion 11 is in contact with the rotation shaft ends 4 and 5 and fixed thereto to determine the sphericity of the ceramic formed body 9.

A portion of the processing jig 6 which comes into contact with the belt-like portion 11 of the ceramic formed body 9 (hereinafter referred to as a "contact portion") is preferably polishing paper. The contact portion of the processing jig 6 is preferably composed of a material mainly containing tungsten carbide (WC). The polishing paper is also called abrasive paper or sandpaper. The polishing paper is paper onto which a polishing agent has been applied. By changing the particle diameter of the polishing agent, a removal amount or a surface roughness can be controlled. A grit number of the polishing paper to be used may remain the same or be changed during processing. The grit number of the polishing paper is preferably P100 or more and P600 or less. The particle diameter of the polishing agent decreases as the grit number of the polishing paper increases. If the grit number is less than P100, the surface of the belt-like portion 11 of the ceramic formed body 9 may become rough. If the surface of the belt-like portion 11 becomes rough, a resulting material for a ceramic ball (sintered body) may have a rough surface. On the other hand, if the grit number exceeds P600, processing efficiency may decrease. Therefore, the grit number of the polishing paper is preferably P100 or more and P600 or less, more preferably P150 or more and P400 or less. For details of the polishing paper, JIS-R-6252 (2022) and JIS-R-6010 (2000) can be referred to. These JIS standards correspond to ISO 3366 (1999), ISO 21948 (2001), ISO 21950 (2001), ISO 6344-1 to 3 (1998), and others.

The polishing paper may be attached to a base material of the processing jig 6 or a periphery of the polishing paper may be fixed. When the periphery of the polishing paper is fixed, tension is preferably applied to the extent that the polishing paper has a curved form (including an arc form). Examples of a method for fixing the periphery of the polishing paper include a method in which the polishing paper is attached straight and a method in which the polishing paper is attached so as to be curved. As described above, when disposed so as to be curved, the polishing paper can softly come into contact with the belt-like portion 11 when the belt-like portion 11 is removed while the ceramic formed body 9 having the belt-like portion 11 is rotated. This makes it possible to evenly remove the belt-like portion 11. Further, when the periphery of the polishing paper is fixed, there are various ways such as fixing upper and lower portions of the polishing paper, fixing right and left portions of the polishing paper, and fixing the entire periphery of the polishing paper.

The material mainly containing WC refers to a material containing 50 mass% or more of WC (tungsten carbide). Such materials are also called cemented carbide alloys. Examples of the cemented carbide alloys include those containing WC and at least one selected from Fe (iron), Ni (nickel), and Co (cobalt). The material mainly containing WC is hard and is therefore suitable for use in the step of removing the belt-like portion. Further, by making the tip of the WC-containing contact portion of the processing jig 6 flat, a removal amount or a surface roughness can be controlled.

Described above is an example of the method of removing the belt-like portion 11 while rotating the ceramic formed body 9 having the belt-like portion 11. This method is not limited thereto, and it is also effective to allow the contact portion of the processing jig 6 to move around the belt-like portion 11 in a state where the ceramic formed body 9 having the belt-like portion 11 is fixed. When a hard material such as a CIP body, a degreased body, or a calcined body is subjected to a flashing step, the ceramic formed body 9 may be rolled on a rotating polishing plate. Alternatively, the ceramic formed body 9 may be subjected to a flashing step by barrel polishing.

As described above, the belt-like portion 11 can be removed from the ceramic formed body 9 having the spherical surface portion 10 and the belt-like portion 11 formed around the circumference of the spherical surface portion 10 by using the processing device according to the embodiment. This makes it possible to obtain a spherical ceramic formed body 13 not having the belt-like portion 11. Debris of the formed body generated by flashing can be again used as a raw material. The debris of the formed body can be reused because it is processed into a ceramic formed body 9. If necessary, the spherical ceramic formed body 13 may be subjected to CIP treatment.

Then, the spherical ceramic formed body 13 is subjected to a degreasing step. The degreasing step is performed by heating the spherical ceramic formed body 13 in a non-oxidative atmosphere at a temperature of 500 degrees Celsius or higher and 800 degrees Celsius or lower for 1 hour or more and 4 hours or less to degrease most of an organic binder previously added. Examples of the non-oxidative atmosphere include a nitrogen gas atmosphere and an argon gas atmosphere. If necessary, the amount of organic matter remaining in a degreased body is controlled by treating the degreased body in an oxidative atmosphere such as air.

Then, the degreased body is subjected to a sintering step. The sintering step is preferably performed at 1650 degrees Celsius or higher and 2000 degrees Celsius or lower. As a non-oxidative atmosphere, a nitrogen gas atmosphere or a reductive atmosphere containing nitrogen gas is preferred. Further, a pressure in a firing furnace is preferably a pressurized atmosphere.

If the degreased body is fired at a sintering temperature as low as less than 1650 degrees Celsius, grain growth of silicon nitride crystal grains is not sufficient, and therefore a dense sintered body is less likely to be obtained. On the other hand, if the degreased body is fired at a high sintering temperature exceeding 2000 degrees Celsius, there is a fear that decomposition to Si and $N_2$ occurs when the pressure of an atmosphere in the furnace is low. Therefore, the sintering temperature is preferably controlled to fall within the above range. Further, a sintering time is preferably 3 hours or more and 12 hours or less.

If necessary, a calcining step may be performed before the sintering step. The calcining step refers to a step in which heat treatment is performed at a temperature lower than that in the sintering step described below. The calcining step is performed at a temperature higher than that in the degreasing step but lower than that in the sintering step.

After the above-described sintering step, HIP (hot isostatic press) treatment is preferably performed. The HIP treatment is performed on a sintered body. The above-described step of sintering a degreased body is referred to as a first sintering step, and the step of subjecting a sintered body to HIP treatment is referred to as a second sintering step.

The HIP treatment is preferably performed at 1600 degrees Celsius or higher and 1900 degrees Celsius or lower and a pressure of 80 MPa or more and 200 MPa or less. By performing the HIP treatment, pores in the sintered body can be decreased. This makes it possible to obtain a dense sintered body. If the pressure is less than 80 MPa, the effect obtained by applying pressure is insufficient. On the other hand, if the pressure is as high as more than 200 MPa, the load on a production device may increase.

When the sintering step is finished, a material for a ceramic ball 1 is completed. If necessary, the sintered material for a ceramic ball 1 may be subjected to honing processing. The honing processing is a step in which abrasive grains are blasted onto the surface of a sintered body to remove foreign matter such as dirt.

The obtained material for a ceramic ball 1 has a sphericity of 2% or less, and a surface roughness Ra of 0.2 $\mu$m or more and 2 $\mu$m or less. Further, by subjecting the material for a ceramic ball 1 to polishing processing, a bearing ball can be produced. The bearing ball has a surface roughness Ra of 0.1 $\mu$m or less. Alternatively, the polishing processing is performed to achieve a surface roughness appropriate for the grade specified in ASTM_F2094.

(Examples)

(Examples 1 to 6, Comparative Examples 1 to 6)

First, ceramic formed bodies 9 each having a spherical surface portion 10 and a belt-like portion 11 formed around a circumference of the spherical surface portion 10 were prepared. Ceramic formed bodies 9 according to each of Examples 1 to 5 are intended to obtain silicon nitride sintered bodies. Ceramic formed bodies 9 according to Example 6 are intended to obtain aluminum oxide sintered bodies.

The ceramic formed bodies 9 were subjected to flashing processing using the processing device 100 shown in FIG. 4 to produce materials for ceramic balls 1 according to each of Examples 1 to 6. As the portion of processing jig 6 of the processing device 100, polishing paper was used. The grit number of the polishing paper used was P100 or more and P600 or less. Each of the spherical surface portion 10 of the ceramic formed bodies 9 was fixed to the rotation shaft ends 4 and 5 at the top and the bottom in such a manner that the belt-like portion 11 was horizontalized. As the displacement amount measurement unit 8, a laser displacement gauge was used. The processing jig 6 was set to automatically move in response to a runout value determined from a displacement amount H determined by the laser displacement gauge. Processing for producing materials for ceramic balls according to Comparative Example 1 was also performed in the same manner.

In each of Examples 1 to 6 and Comparative Example 1, the ceramic formed bodies 9 obtained by die pressing were subjected to flashing processing using the processing device 100. In Comparative Examples 2 to 4 and 6, flashing processing was not performed. In Comparative Example 5, ceramic formed bodies having no belt-like portion were produced by tumbling granulation. In each of Comparative Examples 1 to 5, aluminum oxide formed bodies were used. In Comparative Example 6, aluminum oxide formed bodies were used.

Each of the ceramic formed bodies was subjected to a degreasing step, a sintering step, and a HIP step to produce materials for ceramic balls formed of a silicon nitride sintered body or an aluminum oxide sintered body. It should be noted that degreased bodies for producing materials for ceramic balls 1 according to each of Examples 1 to 6 were obtained by degreasing spherical ceramic formed bodies 13. Degreased bodies for producing materials for ceramic balls according to Comparative Example 1 were also obtained in the same manner. Degreased bodies for producing materials for ceramic balls according to each of Comparative Examples 2 to 4 and 6 were obtained by degreasing ceramic formed bodies 9 each having a belt-like portion 11. Degreased bodies for producing materials for ceramic balls according to Comparative Example 5 were obtained by degreasing ceramic formed bodies free from a belt-like portion 11.

The materials for ceramic balls obtained after the HIP step were subjected to measurements of sphericity, arithmetic mean roughness Ra, total height of profile Rt, Ra1/Ra2, and Rt1/Rt2.

Ra1 and Rt1 are values determined in the circumferential direction of a belt-like portion mark. Ra2 and Rt2 are values determined in a direction perpendicular to the belt-like portion mark. The results of the measurements are shown in Table 1.

[Table 1]

| | | Material for Ceramic Ball | | | | | |
| --- | --- | --- | --- | --- | --- | --- | --- |
| | | Diameter [mm] | Sphericity [%] | Ra [$\mu$m] | Rt [$\mu$m] | Ra1/Ra2 | Rt1/Rt2 |
| | Example 1 | About 10 | 1.6 | 0.2 | 4 | 1.2 | 1.5 |
| | Example 2 | About 31 | 1.2 | 0.5 | 12 | 1.5 | 1.8 |
| | Example 3 | About 31 | 0.6 | 1.7 | 17 | 0.8 | 1.2 |
| | Example 4 | About 47 | 1.4 | 0.8 | 16 | 0.5 | 0.8 |
| | Example 5 | About 47 | 0.5 | 0.5 | 7 | 1.1 | 0.6 |
| | Example 6 | About 31 | 0.8 | 1.8 | 17 | 1.2 | 1.4 |

(continued)

| | Material for Ceramic Ball | | | | | |
|---|---|---|---|---|---|---|
| | Diameter [mm] | Sphericity [%] | Ra [$\mu$m] | Rt [$\mu$m] | Ra1/Ra2 | Rt1/Rt2 |
| Comparative Example 1 | About 31 | 2.8 | 1.9 | 26 | 3.8 | 5.8 |
| Comparative Example 2 | About 10 | 4.5 | 5.3 | 38 | 1.7 | 1.7 |
| Comparative Example 3 | About 31 | 5.2 | 5.9 | 37 | 1.6 | 1.9 |
| Comparative Example 4 | About 47 | 6.8 | 6.8 | 45 | 2.2 | 2.5 |
| Comparative Example 5 | About 10 | 1.8 | 12.6 | 58 | 5.1 | 8.3 |
| Comparative Example 6 | About 31 | 5.7 | 6.1 | 40 | 1.8 | 2.0 |

The materials for ceramic balls according to each of Example 1 and Comparative Examples 2 and 5 having a diameter of about 10 mm are intended to produce bearing balls having a diameter of 3/8 inches. The materials for ceramic balls according to each of Examples 2, 3, and 6 and Comparative Examples 1, 3, and 6 having a diameter of about 31 mm are intended to produce bearing balls having a diameter of 1-3/16 inches. The materials for ceramic balls according to each of Examples 4 and 5 and Comparative Example 4 having a diameter of about 47 mm are intended to produce bearing balls having a diameter of 1-7/8 inches. The materials for ceramic balls according to Comparative Example 1 were produced by performing flashing processing using the processing device 100 in the same manner as in Examples 1 to 6, but the spherical ceramic formed bodies 9 before producing materials for ceramic balls were inherently inferior in sphericity.

Polishing efficiency and yield were examined using the materials for ceramic balls according to each of Examples and Comparative Examples shown in Table 1.

The polishing efficiency was examined by measuring the time required to achieve a surface roughness Ra of 0.005 $\mu$m by finish polishing processing. A surface roughness Ra of 0.005 $\mu$m is a requirement for obtaining bearing balls corresponding to grade 5 specified in ASTM_F2094.

The ratio of the time required for finish polishing processing in Example to the time required for finish polishing processing in Comparative Example 2, 4, or 6 was determined by taking the latter as 100. When the polishing time ratio was 70% or less, the polishing efficiency was evaluated as "improved", and when the polishing time ratio was more than 70 and 100 or less, the polishing efficiency was evaluated as "maintained".

Specifically, in Example 1 and Comparative Example 2 and 5, the polishing efficiency of the materials for ceramic balls to produce bearing balls having a diameter of 3/8 inches was evaluated by taking the polishing time of Comparative Example 2 as 100. In Examples 2, 3, and 6 and Comparative Examples 1, 3 and 6, the polishing efficiency of the materials for ceramic balls to produce bearing balls having a diameter of 1-3/16 inches was evaluated by taking the polishing time of Comparative Example 3 as 100. In Examples 4 and 5 and Comparative Example 4, the polishing efficiency of the materials for ceramic balls to produce bearing balls having a diameter of 1-7/8 inches was evaluated by taking the polishing time of Comparative Example 4 as 100.

The yield was examined by determining a breakage rate of materials for ceramic balls during the above-described finish polishing processing. The finish polishing processing was performed on 1000 materials for each ceramic ball, and the percentage of the number of breakages was determined. When the breakage rate was 0% or more and 0.5% or less, the yield was evaluated as "Improved", when the breakage rate was more than 0.5% and 3% or less, the yield was evaluated as "Maintained", and when the breakage rate was more than 3%, the yield was evaluated as "Defective". The results are shown in Table 2.

[Table 2]

| | Polishing Efficiency | Yield |
|---|---|---|
| Example 1 | Improved | Improved |
| Example 2 | Improved | Improved |
| Example 3 | Improved | Improved |
| Example 4 | Improved | Improved |
| Example 5 | Improved | Improved |
| Example 6 | Improved | Improved |
| Comparative Example 1 | Maintained | Maintained |

(continued)

|  | Polishing Efficiency | Yield |
|---|---|---|
| Comparative Example 2 | - | Maintained |
| Comparative Example 3 | - | Maintained |
| Comparative Example 4 | - | Maintained |
| Comparative Example 5 | Maintained | Defective |
| Comparative Example 6 | - | Maintained |

As can be seen from Table 2, the polishing efficiency and yield of the materials for ceramic balls according to Examples were improved as compared to those of the materials for ceramic balls according to Comparative Examples. On the other hand, when the amount of flashing processing was small as in the case of Comparative Example 1, the polishing efficiency and the yield were only slightly improved. When materials for ceramic balls were produced by tumbling granulation as in the case of Comparative Example 5, the yield was decreased due to lack of strength. This confirmed that tumbling granulation is not suitable when finish processing is performed to the extent that a surface roughness Ra of about 0.005 $\mu$m is achieved. It was also confirmed that the present invention is effective for a ceramic sintered body other than a silicon nitride sintered body as Example 6.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1.   A material for a ceramic ball, wherein

   a sphericity is 2% or less, and
   an arithmetic mean roughness Ra is 0.2 $\mu$m or more and 2 $\mu$m or less.

2.   The material for a ceramic ball according to claim 1, wherein a total height of profile Rt is 4 $\mu$m or more and 20 $\mu$m or less.

3.   The material for a ceramic ball according to claim 1 or 2, wherein when a surface roughness Ra in a circumferential direction of a belt-like portion mark is defined as Ra1, and a surface roughness Ra of a circumference in a direction perpendicular to the belt-like portion mark is defined as Ra2, Ra1/Ra2 is 0.2 or more and 2 or less.

4.   The material for a ceramic ball according to claim 1 or 2, wherein when a total height of profile Rt in a circumferential direction of a belt-like portion mark is defined as Rt1, and a total height of profile Rt of a circumference in a direction perpendicular to the belt-like portion mark is defined as Rt2, Rt1/Rt2 is 0.2 or more and 2 or less.

5.   The material for a ceramic ball according to claim 1 or 2, wherein the material for the ceramic ball is one selected from a silicon nitride sintered body, an aluminum oxide sintered body, a zirconium oxide sintered body, and an aluzir sintered body.

6.   The material for a ceramic ball according to claim 3, wherein the material for the ceramic ball is one selected from a silicon nitride sintered body, an aluminum oxide sintered body, a zirconium oxide sintered body, and an aluzir sintered body.

7.   A bearing ball, wherein the bearing ball being obtained by subjecting the material for a ceramic ball according to claim 1 to polishing processing.

8.   A bearing ball, wherein the bearing ball being obtained by subjecting the material for a ceramic ball according to claim 6 to polishing processing.

9. A device for processing a ceramic formed body, comprising:

a formed body fixing unit that rotatably fixes a ceramic formed body, which has a spherical surface portion and a belt-like portion formed around a circumference of the spherical surface portion, by clamping the spherical surface portion; and
a processing unit that is pressed against the belt-like portion to remove the belt-like portion.

10. The device for processing a ceramic formed body according to claim 9, further comprising:
a displacement amount measurement unit that measures a displacement amount of an outer circumferential surface of the rotating belt-like portion:

a runout value measurement unit that measures, on the basis of the displacement amount, a runout value of the outer circumferential surface of the belt-like portion; and
a processing amount adjustment unit that adjusts, in response to the runout value, an amount of processing of the belt-like portion performed by the processing unit.

11. The device for processing a ceramic formed body according to claim 9 or 10, wherein a portion of the processing unit which comes into contact with the belt-like portion is polishing paper.

12. The device for processing a ceramic formed body according to claim 9 or 10, wherein a portion of the processing unit which comes into contact with the belt-like portion mainly contains WC.

13. A method for processing a ceramic formed body, wherein the device for processing a ceramic formed body according to claim 9 or 10 is used.

1A

2A

3A

FIG. 1

1

2

FIG. 2

FIG. 3

FIG. 4

FIG. 5

FIG. 6

## INTERNATIONAL SEARCH REPORT

| International application No. |
| --- |
| **PCT/JP2023/024590** |

**A.    CLASSIFICATION OF SUBJECT MATTER**

*F16C 33/32*(2006.01)i; *B24B 11/02*(2006.01)i; *C04B 35/10*(2006.01)i; *C04B 35/48*(2006.01)i; *C04B 35/584*(2006.01)i
FI:    F16C33/32; B24B11/02; C04B35/584; C04B35/10; C04B35/48

According to International Patent Classification (IPC) or to both national classification and IPC

**B.    FIELDS SEARCHED**

Minimum documentation searched (classification system followed by classification symbols)

F16C33/32; B24B11/02; C04B35/10; C04B35/48; C04B35/584

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2000-337386 A (KYOCERA CORP.) 05 December 2000 (2000-12-05) paragraphs [0016]-[0023], [0040], fig. 1 | 1, 5, 7 |
| A | | 2-4, 6, 8-13 |
| Y | WO 2021/235343 A1 (KABUSHIKI KAISHA TOSHIBA) 25 November 2021 (2021-11-25) paragraphs [0033]-[0035] | 1, 5, 7 |
| A | | 2-4, 6, 8 |
| Y | WO 2022/138579 A1 (KABUSHIKI KAISHA TOSHIBA) 30 June 2022 (2022-06-30) paragraphs [0011], [0035], [0036] | 5 |
| X | JP 2015-098071 A (SEIBU JIDO KIKI KK) 28 May 2015 (2015-05-28) paragraphs [0002]-[0004], [0013]-[0033], fig. 1-5 | 9, 13 |
| Y | | 11-12 |
| A | | 10 |
| Y | JP 3228924 U (NIKKO CO.) 19 November 2020 (2020-11-19) paragraph [0017] | 11 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 August 2023** | **12 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/024590**

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 05-192597 A (TECHNOGENIA S.A.) 03 August 1993 (1993-08-03)<br>paragraphs [0027], [0028] | 12 |

Form PCT/ISA/210 (second sheet) (January 2015)

<table>
<tr><td colspan="2" align="center"><b>INTERNATIONAL SEARCH REPORT</b><br>Information on patent family members</td><td colspan="2">International application No.<br><br><b>PCT/JP2023/024590</b></td></tr>
</table>

| Patent document cited in search report | Publication date (day/month/year) | Patent family member(s) | Publication date (day/month/year) |
|---|---|---|---|
| JP 2000-337386 A | 05 December 2000 | (Family: none) | |
| WO 2021/235343 A1 | 25 November 2021 | US 2023/0080570 A1 paragraphs [0034]-[0036] EP 4155565 A1 CN 115667184 A | |
| WO 2022/138579 A1 | 30 June 2022 | (Family: none) | |
| JP 2015-098071 A | 28 May 2015 | (Family: none) | |
| JP 3228924 U | 19 November 2020 | (Family: none) | |
| JP 05-192597 A | 03 August 1993 | US 5201917 A column 4, line 47 to column 5, line 5 EP 480851 A1 FR 2667804 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4761613 B
- JP 3853197 B
- JP 2000185976 A